# EUROPÄISCHE PATENTSCHRIFT

(11) **EP 3 366 102 B1**
(45) Veröffentlichungstag und Bekanntmachung des Hinweises auf die Patenterteilung: **27.05.2020**
(21) Anmeldenummer: 18156832.0
(22) Anmeldetag: 15.02.2018
(51) Int. Cl.: A01D 34/00

(54) **VERFAHREN ZUM SCHUTZ EINES KÖRPERTEILS**
METHOD FOR PROTECTING A PART OF A BODY
PROCÉDÉ DE PROTECTION D'UNE PARTIE CORPORELLE

(30) Priorität: 24.02.2017 DE 102017203094
(43) Veröffentlichungstag der Anmeldung: 29.08.2018
(73) Patentinhaber: Robert Bosch GmbH, 70442 Stuttgart (DE)
(72) Erfinder: Weiss, Ulrich, 71634 Ludwigsburg (DE); Paul, Sebastian, 94315 Straubing (DE); Graefenstein, Juergen, 71706 Markgroeningen (DE); Payne, Mark, Suffolk, Suffolk IP12 2GR (GB); Manilathaya, Vishnuprasad, 570014 Karnataka (IN)

(56) Entgegenhaltungen:
- EP-A1- 1 369 024
- WO-A1-2015/040987
- WO-A2-2007/109624
- DE-A1-102009 039 025
- US-A1- 2006 196 003

## Beschreibung

### Stand der Technik

Aus US 3,570,227 A ist bereits ein selbst angetriebener Rasenmäher bekannt, welcher einen Stoßstangenschalter aufweist. Trifft der selbst angetriebene Rasenmäher beispielsweise auf ein Bein eines Kindes, wird der Stoßstangenschalter ausgelöst und der selbst angetriebene Rasenmäher schaltet sich ab.

Aus DE 10 2009 039 025 A1 ist ein Rasenmäher mit einem Körperteildetektor bekannt, welcher in einem Verfahren Verwendung findet, welches vor Verletzungen des Körperteils durch den Rasenmäher schützen soll.

### Offenbarung der Erfindung

Die Erfindung geht aus von einem Verfahren zum Schutz zumindest eines Körperteils vor einer Verletzung durch einen Rasenmäher, insbesondere einen autonomen Rasenmäher, welcher zumindest eine Schutzeinheit aufweist, die zumindest eine Sensoreinheit umfasst, gemäß Anspruch 1. Die Erfindung umfasst des Weiteren einen Rasenmäher gemäß Anspruch 13.

Es wird vorgeschlagen, dass in zumindest einem Verfahrensschritt zumindest von einer Sensoreinheit zur Erkennung eines Körperteils zumindest ein Körperteilkennwert, insbesondere zumindest zwei und vorzugsweise mehrere Körperteilkennwerte, und zumindest ein Verkippungskennwert, insbesondere zumindest zwei und vorzugsweise mehrere Verkippungskennwerte, zumindest einer durch zumindest einen Kontakt mit dem Körperteil ausgelösten Verkippung zumindest eines Teils, insbesondere zumindest eines Großteils, des Rasenmähers und vorzugsweise des vollständigen Rasenmähers relativ zu einem Untergrund sensiert wird.

Unter einem "Schutz eines Körperteils" soll in diesem Zusammenhang insbesondere die Verringerung und vorzugsweise die Vermeidung einer Verletzung des Körperteils durch zumindest einen Teil des Rasenmähers, insbesondere durch eine Bearbeitungseinheit des Rasenmähers, verstanden werden, welche beispielsweise zum Mähen von Rasen ein Schneidmesser aufweist. Insbesondere ist das Verfahren zusätzlich zu einem Schutz von Tieren, insbesondere Haustieren, wie beispielsweise Kleintieren, denkbar. Unter einem "Körperteil" soll insbesondere eine Extremität, wie beispielsweise ein Kopf, ein Arm, insbesondere eine Hand, und/oder ein Bein, insbesondere ein Fuß, einer Person, insbesondere eines Kindes, verstanden werden.

Insbesondere weist der Rasenmäher ein Gehäuse auf, welches während einer Vorwärtsfahrt des Rasenmähers, vorzugsweise während der Rasenmäher zu einer Bearbeitung des Untergrunds vorgesehen ist, ein Auffahren des Rasenmähers auf den Körperteil verhindert. Dies kann insbesondere durch eine keilartige Ausgestaltung des Gehäuses erreicht werden. Insbesondere während einer Rückwärtsfahrt des Rasenmähers, bei welcher der Rasenmäher insbesondere lediglich rangiert, ist die Schutzeinheit dazu vorgesehen, den Körperteil vor einer Verletzung durch Auffahren des Rasenmähers zu schützen. Unter "vorgesehen" soll insbesondere speziell ausgestaltet, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter "autonom" soll in diesem Zusammenhang insbesondere "eigenständig arbeitend" verstanden werden. Vorzugsweise verrichtet der autonome Rasenmäher in zumindest einem Betriebszustand eine Arbeit zumindest teilweise, vorzugsweise zumindest zu einem Großteil unabhängig von einem Eingreifen durch einen Bediener. Der autonome Rasenmäher ist insbesondere dazu vorgesehen, sich selbsttätig in zumindest einem Arbeitsbereich und/oder in einer Umgebung, insbesondere nach einem Anlernprozess und/oder abhängig von einer Bereichsbegrenzung, fortzubewegen und/oder zu orientieren und/oder zu navigieren. Der Ausdruck "sich selbsttätig fortbewegen und/oder orientieren und/oder navigieren" soll hier insbesondere eine Fortbewegung, eine Orientierung und/oder Navigation des autonomen Rasenmähers, insbesondere nach einem Anlernprozess, unabhängig von einem menschlichen Eingriff definieren. Bevorzugt ist der autonome Rasenmäher dazu vorgesehen, einen als Rasenfläche ausgebildeten Arbeitsbereich und/oder eine als Garten ausgebildete Umgebung abzufahren und/oder zu bearbeiten. Unter einer "Orientierung" soll in diesem Zusammenhang insbesondere eine Erfassung einer Position und/oder einer Ausrichtung des Rasenmähers, insbesondere relativ zu einem Arbeitsbereich, insbesondere zu einem Begrenzungselement, welches den Arbeitsbereich definiert, und/oder zu einer Versorgungs- und/oder Parkstation, verstanden werden. Unter einer "Ausrichtung" soll in diesem Zusammenhang insbesondere ein Winkel, den eine Fahrtrichtung des autonomen Rasenmähers relativ zu einem Arbeitsbereich, insbesondere zu einem Begrenzungselement, welches den Arbeitsbereich definiert, und/oder zu einer Versorgungs- und/oder Parkstation verstanden werden Als "Arbeitsbereich" soll in diesem Zusammenhang insbesondere ein von dem autonomen Arbeitsgerät zu bearbeitender Bereich definiert sein.

Insbesondere weist der Rasenmäher eine Navigationseinheit auf, welche zur Navigation des Rasenmähers vorgesehen ist. Unter einer "Navigationseinheit" soll in diesem Zusammenhang insbesondere eine Einheit verstanden werden, die zumindest teilweise zu einer, insbesondere von einem Bediener unabhängigen, Navigation des Rasenmähers, vorzugsweise entsprechend einem Algorithmus, vorgesehen ist. Vorzugsweise umfasst die Navigationseinheit eine Prozessoreinheit und eine Speichereinheit sowie zumindest ein in der Speichereinheit gespeichertes Betriebsprogramm. Ferner soll in diesem Zusammenhang unter einer "Speichereinheif insbesondere eine Einheit verstanden werden, die dazu vorgesehen ist, zumindest eine Information, vorteilhaft von einer Stromversorgung unabhängig, zu speichern.

Die Schutzeinheit ist insbesondere dazu vorgesehen, in einem Betrieb des Rasenmähers das Verfahren zum Schutz eines Körperteils auszuführen. Dazu weist die Schutzeinheit zumindest eine Speichereinheit auf, in welcher das Verfahren zum Schutz eines Körperteils hinterlegt ist, sowie vorzugsweise eine Prozessoreinheit, mittels welcher das Verfahren zum Schutz eines Körperteils ausführbar ist. Die Schutzeinheit kann insbesondere Teil der Navigationseinheit sein, beispielsweise kann die Schutzeinheit dieselbe Speichereinheit und/oder Recheneinheit nutzen wie die Navigationseinheit.

Unter einem "Körperteilkennwert" soll in diesem Zusammenhang insbesondere ein Kennwert verstanden werden, welcher mit zumindest einem Körperteil korreliert ist und/oder dieses abbildet. Beispielsweise kann der Körperteilkennwert eine Abmessung des Körperteils sein, wie insbesondere eine Höhe, eine Breite und/oder eine Länge. Alternativ oder zusätzlich kann der Körperteilkennwert ein Oberflächenkennwert, insbesondere ein Haut- und/oder Fleischkennwert, wie beispielsweise eine Reflexivität, eine Induktivität und/oder eine Kapazität des Körperteils sein. Unter einem "Verkippungskennwert" soll in diesem Zusammenhang insbesondere ein Wert verstanden werden, welcher mit einer Verkippung zumindest eines Teils des Rasenmähers korreliert ist und/oder diese abbildet. Beispielsweise kann ein Verkippungskennwert ein Verkippungswinkel und/oder eine bei einer Verkippung auftretende Beschleunigung sein, aus welcher sich insbesondere durch Gewichtung mit der Gravitationskonstanten der Verkippungswinkel berechnen lässt.

Unter "zumindest einem Kontakt des Rasenmähers mit dem Körperteil" soll in diesem Zusammenhang insbesondere ein Anfahren, vorzugsweise ein Auffahren und besonders bevorzugt Darüberfahren, zumindest eines Teils des Rasenmähers an/auf/über zumindest einen Teil des Körperteils verstanden werden. Unter "zumindest einem Teil des Rasenmähers" soll insbesondere zumindest ein Bauteil des Rasenmähers, wie beispielsweise das Fahrwerk, eine Antriebsachse des Fahrwerks, ein Rad, eine dem Rasenmäher vorgelagerte Achse und/oder das Gehäuse, verstanden werden.

Durch das erfindungsgemäße Verfahren kann eine Betriebssicherheit des Rasenmähers erhöht werden. Vorteilhaft können Körperteile vor einer Verletzung durch den Rasenmäher geschützt werden.

Ferner wird vorgeschlagen, dass in zumindest einem Verfahrensschritt durch zumindest einen als Beschleunigungssensor ausgebildeten Sensor der Sensoreinheit der Verkippungskennwert sensiert wird. Der Sensor ist insbesondere an einem bei einer Verkippung verkippten Teil des Rasenmähers angeordnet. Dadurch kann vorteilhaft eine kostengünstige und konstruktiv einfache Sensierung des Verkippungskennwerts erzielt werden. Ferner kann der Sensor als ein Sensor zur Messung eines Verkippungskennwerts ausgebildet sein, wie beispielsweise als ein Neigungssensor und/oder Drehratensensor. Vorzugsweise handelt es sich bei dem Sensor um einen Hall-Sensor. Ferner könnte die Sensoreinheit insbesondere zumindest einen Sensor aufweisen, welcher beispielsweise zur Sensierung eines Anhebens des Rasenmähers vorgesehen ist. Alternativ oder zusätzlich kann die Sensoreinheit einen weiteren Sensor aufweisen, welcher insbesondere als eine Kamera, insbesondere eine Infrarotkamera, ein Induktions- und/oder Kapazitätssensor ausgebildet sein kann, mittels dessen in zumindest einem Verfahrensschritt der Körperkennwert sensiert werden kann. Hierdurch kann insbesondere ein Körperteil bereits vor einem Kontakt mit diesem erkannt werden.

Weiterhin wird vorgeschlagen, dass in zumindest einem Verfahrensschritt bei einer zumindest teilweisen Verkippung des Rasenmähers um eine Rollachse des Rasenmähers der Verkippungskennwert sensiert wird. Die Rollachse ist insbesondere zumindest im Wesentlichen parallel zu einer Längsachse des Rasenmähers und vorzugsweise mit dieser identisch. Ferner ist die Rollachse zumindest im Wesentlichen senkrecht zu einer Achse des Fahrwerks, insbesondere zu der Antriebsachse. Der Ausdruck "zumindest im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel insbesondere eine maximale Abweichung von insbesondere kleiner als 8°, vorteilhaft kleiner als 5° und besonders vorteilhaft kleiner als 2° aufweist. Alternativ oder zusätzlich kann in zumindest einem Verfahrensschritt eine zumindest teilweise Verkippung des Rasenmähers um eine Nickachse und/oder eine Gierachse sensiert werden. Die Nickachse ist insbesondere zumindest im Wesentlichen senkrecht zur Rollachse sowie vorzugsweise zumindest im Wesentlichen parallel zu einer Achse des Fahrwerks, insbesondere der Antriebsachse und ist vorzugsweise mit dieser identisch. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung insbesondere eine Abweichung kleiner als 8°, vorteilhaft kleiner als 5° und besonders vorteilhaft kleiner als 2° aufweist. Die Gierachse ist insbesondere zumindest im Wesentlichen senkrecht zur Rollachse und zur Gierachse. Insbesondere kann die Sensierung des Verkippungskennwerts um die Nickachse und/oder die Gierachse mit einem selben Beschleunigungssensor erfolgen wie die Sensierung um die Rollachse. Alternativ kann der Rasenmäher zur Sensierung der Verkippung um die Nick- und/oder Gierachse weitere Sensoren, welche insbesondere als Beschleunigungssensoren ausgebildet sin können, aufweisen. Dadurch kann eine vorteilhaft kostengünstige und konstruktiv einfache Ausgestaltung der Sensoreinheit erreicht werden.

Es wird vorgeschlagen, dass in zumindest einem Verfahrensschritt die Schutzeinheit den Verkippungskennwert und/oder den Körperteilkennwert mit zumindest einem Arbeitsbereichsdatensatz, insbesondere einer virtuellen Karte, des Arbeitsbereichs vergleicht. Unter einem "Arbeitsbereichsdatensatz" soll insbesondere ein Datensatz verstanden werden, welcher dem Arbeitsbereich zugeordnet ist. Der Arbeitsbereichsdatensatz ist insbesondere in der Speichereinheit der Schutzeinheit und/oder der Navigationseinheit hinterlegt. Bei der virtuellen Karte kann es sich insbesondere um eine bereits vorhandene Navigationskarte eines Orts handeln, welche beispielsweise auf GPS-Daten basieren kann. Ferner ist denkbar, dass die virtuelle Karte speziell für den Arbeitsbereich erstellt wird, wie beispielsweise durch Einlernen, insbesondere durch ein angeleitetes Abfahren des Arbeitsbereichs durch den Rasenmäher und/oder anhand von Begrenzungselementen. In zumindest einem Verfahrensschritt definiert der Arbeitsbereichsdatensatz zumindest eine Steigung des Untergrunds einer aktuellen Arbeitsposition des Rasenmähers. Insbesondere umfasst der Arbeitsbereichsdatensatz zumindest ein Höhenprofil. Hierdurch kann ein fehlerhaftes Auslösen einer Körperteilerkennung vermieden werden. Ferner kann der Arbeitsbereichsdatensatz weitere Daten, wie insbesondere zumindest einen Hinderniskennwert bekannter Hindernisse, wie beispielsweise von Wurzeln, Blumentöpfen, Baumstämmen, Begrenzungen, wie beispielsweise deren Maße, insbesondere deren Höhe, Breite und/oder Länge, sowie deren Induktivität und/oder Kapazität, umfassen.

Weiterhin wird vorgeschlagen, dass in zumindest einem Verfahrensschritt die Schutzeinheit zur Körperteilerkennung zumindest eine Änderung des Verkippungskennwerts berücksichtigt. Unter einer "Änderung des Verkippungskennwerts" soll insbesondere eine Überschreitung zumindest eines charakteristischen Verkippungsgrenzkennwerts verstanden werden. Alternativ oder zusätzlich kann der Verkippungskennwert, insbesondere mehrere Verkippungskennwerte, mit einer charakteristischen Verkippungskennlinie verglichen werden. Unter einer "charakteristischen Verkippungskennlinie" soll insbesondere eine Verkippungs-Strecken-Kennlinie verstanden werden, welche dem durch den Körperteil ausgelösten statistischen Verkippungsverhalten des Rasenmähers entspricht. Die Änderung des Verkippungskennwerts entspricht dabei der Steigung der charakteristischen Verkippungskennlinie. Vorzugsweise wird die Körperteilerkennung ausgelöst, wenn eine Korrelation der Verkippungskennwerte mit der charakteristischen Verkippungskennlinie einen Korrelationskoeffizienten von zumindest 0,5, vorzugsweise von zumindest 0,6 und besonders bevorzugt von zumindest 0,7 überschreitet. Hierdurch kann eine Genauigkeit der Körperteilerkennung verbessert werden.

Es wird vorgeschlagen, dass in zumindest einem Verfahrensschritt die Schutzeinheit bei Erkennung eines Körperteils zumindest eine Schutzroutine ausführt, welche zumindest einen der folgenden Schutzschritte umfasst: Anhalten zumindest eines Teils des Rasenmähers, insbesondere der Bearbeitungseinheit und vorzugsweise des gesamten Rasenmähers, Ausgabe eines Warn- und/oder Fehlersignals und/oder Richtungsänderung, insbesondere weg von dem Körperteil, des Rasenmähers. Ferner kann alternativ oder zusätzlich in einem Schutzschritt eine Bearbeitungseinheit und/oder eine Antriebseinheit des Rasenmähers abgeschaltet werden. Das Warn- und/oder Fehlersignal kann insbesondere ein elektrisches, optisches und/oder akustisches Signal sein. Das Warn- und/oder Fehlersignal kann insbesondere am Rasenmäher ausgegeben werden. Ferner ist denkbar, dass ein Warn- und/oder Fehlersignal an ein weiteres Gerät versandt wird, wie beispielsweise an eine Versorgungs- und/oder Parkstation für den Rasenmäher, an einen Rechner, insbesondere ein Mobiltelefon oder ein Smartphone, und vorzugsweise mit einem Anwendungsprogramm, wie beispielsweise einer App, abrufbar ist. Hierdurch kann auf einfache Art und Weise der Körperteil vor einer Verletzung durch den Rasenmäher geschützt werden.

Es wird ferner vorgeschlagen, dass in zumindest einem Verfahrensschritt die Schutzeinheit abhängig von einer Position des Rasenmähers relativ zu einem Arbeitsbereich zumindest einen Schutzschritt der Schutzroutine variiert. Insbesondere hält in zumindest einem Verfahrensschritt bei einer Körperteilerkennung in einem Nahbereich zumindest einer Versorgungs- und/oder Parkstation des Rasenmähers die Schutzeinheit den Rasenmäher an und gibt ein Fehler- und/oder Warnsignal aus. Hierdurch kann verhindert werden, dass der Rasenmäher bei der Ausführung der Schutzroutine die Versorgungs- und/oder Parkstation beschädigt und/oder selbst durch diese beschädigt wird. Insbesondere für den Fall, dass innerhalb des Arbeitsbereichs ein Körperteil erkannt wird, wird der Rasenmäher von dem Körperteil weg gedreht. Insbesondere für den Fall, dass der Rasenmäher die Schutzroutine in einem Randbereich des Arbeitsbereichs ausführt, wird der Rasenmäher, insbesondere abhängig von einer Orientierung des Rasenmähers relativ zu einem Begrenzungselement, welches den Arbeitsbereich begrenzt, in Richtung des Arbeitsbereichs zurückgedreht.

In einer Ausgestaltung der Erfindung wird vorgeschlagen, dass in zumindest einem Verfahrensschritt die Schutzeinheit anhand des Verkippungskennwerts und/oder des Körperteilkennwerts ein dem Körperteil nächstgelegenes Rad des Rasenmähers bestimmt. Unter einem "nächstgelegenen Rad" soll in diesem Zusammenhang insbesondere das Rad des Rasenmähers, insbesondere der Antriebsachse, verstanden werden, welches dem erfassten Körperteil am nächsten liegt. Insbesondere ist das nächstgelegene Rad das Rad, welches in Kontakt mit dem Körperteil ist. Das nächstgelegene Rad kann insbesondere anhand einer Richtung der Verkippung des Teils des Rasenmähers, insbesondere anhand des Verkippungskennwerts und besonders bevorzugt anhand des Vorzeichens des Verkippungskennwerts, bestimmt werden. Ferner kann in zumindest einem Verfahrensschritt die Schutzeinheit anhand des Verkippungskennwerts und/oder des Körperteilkennwerts ein dem Körperteil abgewandtes Rad des Rasenmähers bestimmen. Unter einem "abgewandten Rad" soll in diesem Zusammenhang insbesondere das Rad des Rasenmähers, insbesondere der Antriebsachs, verstanden werden, welches von dem erfassten Körperteil am weitesten entfernt ist. Insbesondere ist das abgewandte Rad das Rad, welches frei von einem Kontakt mit dem Körperteil ist. Das dem Körperteil abgewandte Rad kann insbesondere anhand einer Richtung der Verkippung des Teils des Rasenmähers, insbesondere anhand des Verkippungskennwerts und besonders bevorzugt anhand des Vorzeichens des Verkippungskennwerts bestimmt werden. Hierdurch kann vorteilhaft die Lage des Körperteils erkannt werden.

Des Weiteren wird vorgeschlagen, dass in zumindest einem Verfahrensschritt das dem erfassten Körperteil nächstgelegene Rad blockiert wird und der Rasenmäher entgegen der Richtung des Körperteils um das nächstgelegene Rad gedreht wird. Insbesondere wird für diesen Fall das dem Körperteil abgewandte Rad angetrieben. Ferner wird vorgeschlagen, dass in zumindest einem Verfahrensschritt das dem erfassten Körperteil abgewandte Rad blockiert wird und der Rasenmäher entgegen der Richtung des Körperteils um das abgewandte Rad gedreht wird. Insbesondere wird für diesen Fall das dem Körperteil zugewandte Rad angetrieben. Hierdurch kann vermieden werden, dass der Rasenmäher bei Erkennung eines Körperteils durch auf der Stelle drehen den Körperteil verletzt. Ferner wird ein Rasenmäher, insbesondere autonomer Rasenmäher, mit zumindest der Schutzeinheit zu einer Durchführung eines Verfahrens vorgeschlagen. Hierdurch kann vorteilhaft eine Betriebssicherheit des Rasenmähers erhöht werden.

Das erfindungsgemäße Verfahren zum Schutz zumindest eines Körperteils und der erfindungsgemäße Rasenmäher mit einer Schutzeinheit zur Ausführung des erfindungsgemäßen Verfahrens sollen hierbei nicht auf die oben beschriebene Anwendung und Ausführungsform beschränkt sein. Insbesondere können/kann das erfindungsgemäße Verfahren und/oder der Rasenmäher zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination.

### Es zeigen:

- Fig. 1: einen Rasenmäher bei der Bearbeitung eines Arbeitsbereichs in einer perspektivischen Ansicht,
- Fig. 2: eine schematische Darstellung einer beispielhaften Betriebshierarchie des Rasenmähers,
- Fig. 3: einen schematischen Verfahrensablauf eines Betriebsverfahrens des Rasenmähers,
- Fig. 4: einen schematischen Verfahrensablauf eines Verfahrens zum Schutz eines Körperteils,
- Fig. 5: Messdaten von Verkippungskennwerten einer beispielhaften Körperteilerkennung,
- Fig. 6: einen schematischen Verfahrensablauf eines Steuerverfahrens zum Schutz eines Körperteils und
- Fig. 7: Messdaten von Verkippungskennwerten einer weiteren beispielhaften Körperteilerkennung,

### Beschreibung des Ausführungsbeispiels

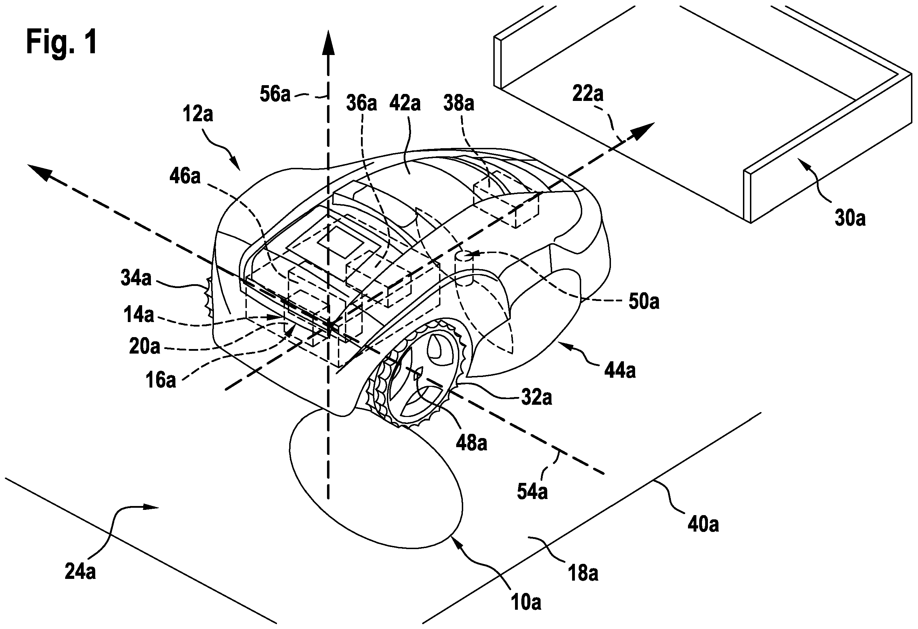

Fig. 1 zeigt einen Rasenmäher 12a in einer perspektivischen Darstellung. Der Rasenmäher 12a ist als ein autonomer Rasenmäher 12a ausgebildet.

Der Rasenmäher 12a weist ein Gehäuse 42a auf. Das Gehäuse 42a ist in einer Seitenansicht keilartig ausgebildet. Das Gehäuse 42a ist zur Aufnahme und zum Schutz weiterer Einheiten und Komponenten des Rasenmähers 12a vorgesehen. Der Rasenmäher 12a weist ein Fahrwerk 44a auf. Das Gehäuse 42a ist mit dem Fahrwerk 44a verbunden. Eine Antriebseinheit 46a umfasst zumindest einen Elektromotor. Das Fahrwerk 44a weist zumindest eine Antriebsachse 48a auf. Die Antriebsachse 48a ist eine Hinterachse des Rasenmähers 12a. Die Antriebsachse 48a umfasst zwei Räder 32a, 34a. Die Räder 32a, 34a sind relativ zum Gehäuse 42a einander gegenüberliegend angeordnet. Zum Antrieb weist der Rasenmäher 12a zumindest eine Antriebseinheit 46a auf. Die Antriebseinheit 46a ist in dem Gehäuse 42a angeordnet. Die Antriebseinheit 46a ist mit der Antriebsachse 48a verbunden. Der Rasenmäher 12a weist eine Bearbeitungseinheit 50a auf. Die Bearbeitungseinheit 50a umfasst zumindest ein Schneidmesser, welches zum Mähen von Rasen vorgesehen ist.

Der Rasenmäher 12a weist eine Rollachse 22a auf. Die Rollachse 22a ist zumindest im Wesentlichen parallel zu einer Längsachse des Rasenmähers 12a und ist insbesondere mit dieser identisch. Die Rollachse 22a ist zumindest im Wesentlichen senkrecht zur Antriebsachse 48a. Der Rasenmäher 12a weist eine Nickachse 54a auf. Die Nickachse 54a ist zumindest im Wesentlichen parallel zur Antriebsachse 48a und ist vorzugsweise mit dieser identisch. Die Nickachse 54a ist insbesondere zumindest im Wesentlichen senkrecht zur Rollachse 22a. Ferner weist der Rasenmäher 12a eine Gierachse 56a auf. Die Gierachse 56a ist zumindest im Wesentlichen senkrecht zur Rollachse 22a. Ferner ist die Gierachse 56a zumindest im Wesentlichen senkrecht zur Nickachse 54a.

Der Rasenmäher 12a ist dazu vorgesehen und insbesondere speziell programmiert, einen Untergrund 18a eines Arbeitsbereichs 24a zu bearbeiten. Der Arbeitsbereich 24a kann durch zumindest ein Begrenzungselement 40a, wie beispielsweise einen Begrenzungsdraht, begrenzt und/oder abgesteckt sein. Alternativ oder zusätzlich kann der Arbeitsbereich 24a speziell eingespeichert und insbesondere eingelernt werden. Ferner kann der Rasenmäher 12a auch für mehrere Arbeitsbereiche 24a vorgesehen sein. Die verschiedenen Arbeitsbereiche 24a können dabei separat gespeichert und je nach aktueller Position des Rasenmähers 12a separat angewählt werden.

Der Rasenmäher 12a weist eine Navigationseinheit 36a auf. Der Arbeitsbereich 24a ist in der Navigationseinheit 36a in Form einer virtuellen Karte hinterlegt. Die virtuelle Karte des Arbeitsbereichs 24a umfasst insbesondere zumindest einen Arbeitsbereichsdatensatz. Der Arbeitsbereichsdatensatz umfasst zumindest die Grenzen des Arbeitsbereichs 24a und/oder die Position des Arbeitsbereichs 24a und/oder definiert eine Steigung 23a des Arbeitsbereichs 24a, insbesondere an der jeweiligen Position des Rasenmähers 12a innerhalb des Arbeitsbereichs 24a. Ferner können in dem Arbeitsbereichsdatensatz feststehende Hindernisse, wie beispielsweise Steine, Wege, Beetbegrenzungen, Blumentöpfe und/oder dergleichen, sowie insbesondere deren Positionen innerhalb des Arbeitsbereichs 24a hinterlegt sein. Zu einer Bearbeitung des Untergrunds 18a des Arbeitsbereichs 24a navigiert die Navigationseinheit 36a, insbesondere abhängig von der aktuellen Position des Rasenmähers 12a, den Rasenmäher 12a über den Arbeitsbereich 24a. Zu einer Erfassung einer aktuellen Position des Rasenmähers 12a weist die Navigationseinheit 36a eine Positionserfassungseinheit 38a auf. Die Positionserfassungseinheit 38a ist dazu vorgesehen, eine aktuelle Position des Rasenmähers 12a relativ zum Arbeitsbereich 24a zu bestimmen. Zur Navigation des Rasenmähers 12a gleicht die Navigationseinheit 36a die aktuelle Position mit der virtuellen Karte des Arbeitsbereichs 24a ab.

Zur Stromversorgung und/oder zur Aufbewahrung des Rasenmähers 12a in einem Ruhezustand ist die Navigationseinheit 36a ferner dazu vorgesehen, eine Versorgungs- und/oder Parkstation 30a für den Rasenmäher 12a anzufahren.

In einem Normalbetriebszustand ist der Rasenmäher 12a zu einer Bearbeitung des Untergrunds 18a zu einer Vorwärtsfahrt vorgesehen. Durch die Ausgestaltung des Gehäuses 42a wird bei der Vorwärtsfahrt eine Verletzung von Körperteilen 10a, z.B. durch Auffahren des Rasenmähers 12a auf den Körperteil 10a, vermieden. In einem weiteren Normalbetriebszustand, in welchem der Rasenmäher 12a insbesondere lediglich rangiert und vorzugsweise nicht den Untergrund 18a bearbeitet, ist der Rasenmäher 12a zu einer Rückwärtsfahrt vorgesehen, beispielsweise, wenn er von einem Hindernis aus zurücksetzt und/oder aus der Versorgungs- und/oder Parkstation 30a herausfährt. Bei einer Rückwärtsfahrt kann eine Verletzung von Körperteilen 10a, z.B. durch Auffahren des Rasenmähers 12a nicht durch eine Ausgestaltung des Gehäuses 42a vermieden werden.

Zu einem Schutz eines Körperteils 10a, insbesondere bei einer Rückwärtsfahrt des Rasenmähers 12a, weist dieser eine Schutzeinheit 14a auf. Die Schutzeinheit 14a ist zur Ausführung eines Verfahrens zum Schutz von zumindest einem Körperteil 10a vorgesehen. Die Schutzeinheit 14a weist eine Sensoreinheit 16a auf. Die Sensoreinheit 16a weist zumindest einen Sensor 20a auf. Im vorliegenden Fall ist der Sensor 20a an der Antriebsachse 48a angeordnet. Alternativ könnte der Sensor 20a an dem Gehäuse 42a oder auch an einer dem Gehäuse 42a vorgelagerten zusätzlichen Sensorachse angeordnet sein. Ferner ist im vorliegenden Fall der Sensor 20a als ein Beschleunigungssensor ausgebildet. Der Sensor 20a ist zu einer Sensierung einer Verkippung zumindest eines Teils, insbesondere der Antriebsachse 48a, des Rasenmähers 12a relativ zum Untergrund 18a vorgesehen.

Alternativ oder zusätzlich kann die Sensoreinheit 16a weitere Sensoren 20a, wie beispielsweise eine Infrarotkamera sowie Induktionssensoren und/oder Kapazitätssensoren aufweisen, welche insbesondere zu einer Bestimmung eines Körperteilkennwerts vorgesehen sind. Ferner ist insbesondere eine Oberflächen-, Haut- und/oder Fleischerkennung denkbar. Ferner kann die Sensoreinheit 16a weitere Sensoren aufweisen, welche beispielsweise zur Sensierung eines Anhebens des Rasenmähers 12a vorgesehen sind.

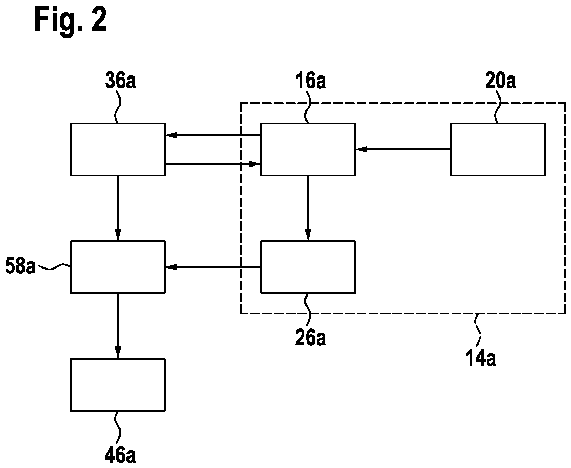

In Fig. 2 ist eine schematische Darstellung einer beispielhaften Betriebshierarchie des Rasenmähers 12a dargestellt.

Die Navigationseinheit 36a gleicht zur Navigation des Rasenmähers 12a die von der Positionserfassungseinheit 38a bestimmte aktuelle Position des Rasenmähers 12a mit der virtuellen Karte des Arbeitsbereichs 24a ab. Daraus berechnet die Navigationseinheit 36a Navigationsdaten, welche sie an eine Bewegungssteuerung 58a des Rasenmähers 12a weiterleitet. Die Bewegungssteuerung 58a ist zu einer Ansteuerung der Antriebseinheit 46a vorgesehen.

Ferner ist die Schutzeinheit 14a zu einem Datenaustausch mit der Navigationseinheit 36a und/oder der Bewegungssteuerung 58a vorgesehen. Für den Fall, dass ein Verfahren zum Schutz eines Körperteils 10a aktiviert wird, übermittelt der Sensor 20a einen Verkippungskennwert 25a an die Sensoreinheit 16a der Schutzeinheit 14a. Die Schutzeinheit 14a wertet den Verkippungskennwert 25a aus und führt, falls notwendig, eine Schutzroutine 26a aus. Die Steuerdaten der Schutzroutine 26a werden an die Bewegungssteuerung 58a übermittelt.

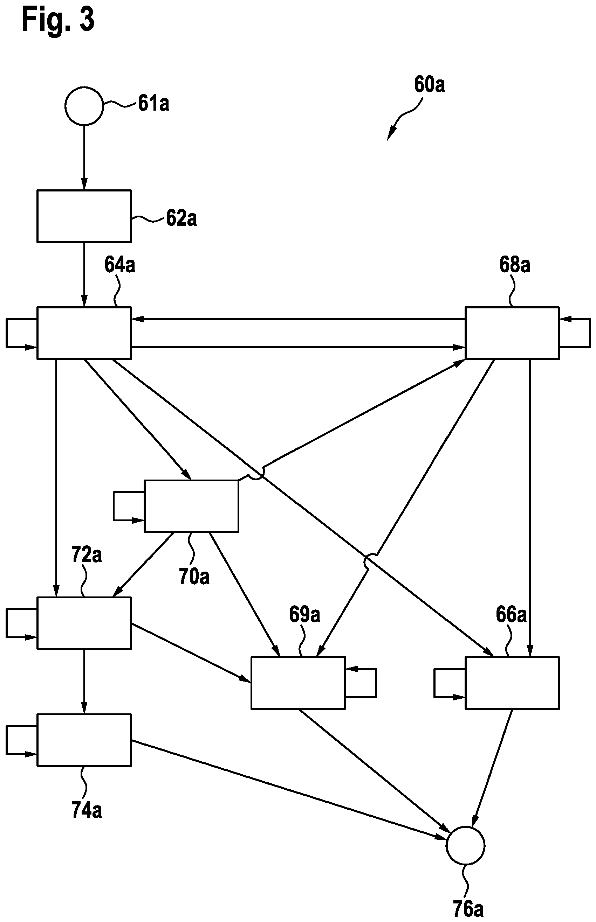

In Fig. 3 ist ein schematischer Verfahrensablauf eines Betriebsverfahrens 60a des Rasenmähers 12a dargestellt. Das Verfahren zum Schutz eines Körperteils 10a ist Teil des Betriebsverfahrens 60a.

Das Betriebsverfahren 60a umfasst einen Betriebsverfahrensschritt 61a. In dem ersten Betriebsverfahrensschritt 61a wird eine Navigation des Rasenmähers 12a initialisiert. In einem weiteren Betriebsverfahrensschritt 62a wird der Rasenmäher 12a in Bewegung versetzt.

Das Betriebsverfahren 60a umfasst einen weiteren Betriebsverfahrensschritt 64a. In dem weiteren Betriebsverfahrensschritt 64a wird der Rasenmäher 12a mittels der Navigationseinheit 36a in einer Rückwärtsfahrt navigiert. Während der Rückwärtsfahrt ist die Bearbeitungseinheit 50a des Rasenmähers 12a deaktiviert. Die Navigationseinheit 36a gleicht die aktuelle Position des Rasenmähers 12a mit der virtuellen Karte ab und entscheidet basierend darauf, ob die Rückwärtsfahrt fortgesetzt werden soll. Die Rückwärtsfahrt wird fortgesetzt, bis eine Pause, eine Vorwärtsfahrt und/oder ein Verfahren zum Schutz eines Körperteils 10a erfolgt. Insbesondere erfolgt die Rückwärtsfahrt maximal, bis der Rasenmäher 12a sich außerhalb des Arbeitsbereichs 24a befindet.

Das Betriebsverfahren 60a umfasst einen weiteren Betriebsverfahrensschritt 66a. In dem weiteren Betriebsverfahrensschritt 66a wird ein Abbruch einer Navigation des Rasenmähers 12a durchgeführt, beispielsweise dann, wenn der Rasenmäher 12a sich außerhalb des Arbeitsbereichs 24a befindet und/oder ein Fehlbetrieb zumindest einer Komponente des Rasenmähers 12a vorliegt, wie beispielsweise ein Defekt der Antriebseinheit 46a und/oder eines Rads 32a, 34a.

Das Betriebsverfahren 60a umfasst einen weiteren Betriebsverfahrensschritt 68a. In dem weiteren Betriebsverfahrensschritt 68a wird der Rasenmäher 12a mittels der Navigationseinheit 36a in einer Vorwärtsfahrt navigiert. Während der Vorwärtsfahrt bearbeitet der Rasenmäher 12a mittels der Bearbeitungseinheit 50a den Untergrund 18a des Arbeitsbereichs 24a. Die Navigationseinheit 36a gleicht die aktuelle Position des Rasenmähers 12a mit der virtuellen Karte des Arbeitsbereichs 24a ab und bestimmt abhängig von der Position des Rasenmähers 12a, ob die Vorwärtsfahrt fortgesetzt werden soll. Die Vorwärtsfahrt wird fortgesetzt, bis eine Pause und/oder eine Rückwärtsfahrt erfolgen soll. Insbesondere erfolgt die Vorwärtsfahrt maximal, bis der Rasenmäher 12a sich außerhalb des Arbeitsbereichs 24a befindet. Ferner wird der Rasenmäher 12a in Vorwärtsfahrt betrieben, bis sich der Rasenmäher 12a in einem Endzustand befindet, eine maximale Laufzeit abgelaufen ist, ein Fehlerzustand auftritt und/oder erneut eine Rückwärtsfahrt erfolgt.

Das Betriebsverfahren 60a umfasst einen weiteren Betriebsverfahrensschritt 70a. In dem weiteren Betriebsverfahrensschritt 70a wird der Rasenmäher 12a bei einer Rückwärtsfahrt von der Navigationseinheit 36a angehalten. Die Rückwärtsfahrt wird kurzzeitig pausiert. Der Betriebsverfahrensschritt 70a wird beendet, wenn der Rasenmäher 12a in eine Vorwärtsfahrt versetzt werden soll, wenn eine maximale Laufzeit beendet ist und/oder wenn ein Verfahren zum Schutz eines Körperteils 10a erfolgt.

Das Betriebsverfahren 60a umfasst einen weiteren Betriebsverfahrensschritt 72a. In dem weiteren Betriebsverfahrensschritt 72a wird das Verfahren zum Schutz eines Körperteils 10a durchgeführt. Für den Fall, dass ein Körperteil 10a erkannt wird, wird die Schutzroutine 26a ausgeführt und/anschließend eine Navigation des Rasenmähers 12a fortgeführt oder beendet. Für den Fall, dass bei dem Verfahren zum Schutz eines Körperteils 10a ein Fehler auftritt, wird ein Fehlbetriebssignal ausgegeben.

Das Betriebsverfahren 60a umfasst einen weiteren Verfahrensschritt 74a. In dem Verfahrensschritt 74a wird ein Fehlbetriebssignal des Verfahrens zum Schutz eines Körperteils 10a ausgegeben.

Das Betriebsverfahren 60a umfasst einen weiteren Verfahrensschritt 76a. In dem Verfahrensschritt 76a wird insbesondere zumindest nach der Ausführung des Verfahrensschritt 74a, des Betriebsverfahrensschritts 68a und/oder des Betriebsverfahrensschritts 66a die Navigation des Rasenmähers 12a beendet.

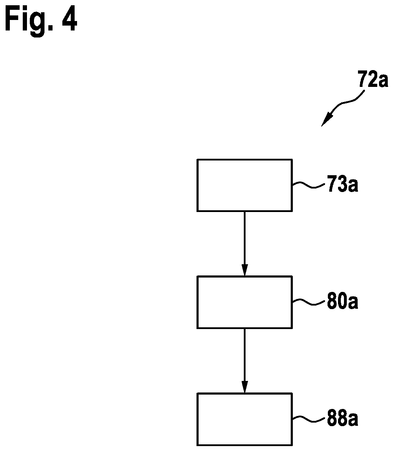

In Fig. 4 ist ein schematischer Verfahrensablaufplan des Verfahrens zum Schutz eines Körperteils 10a dargestellt.

Das Verfahren 72a umfasst zumindest einen Verfahrensschritt 73a. In dem Verfahrensschritt 73a wird von der Sensoreinheit 16a zur Erkennung des Körperteils 10a zumindest ein Verkippungskennwert 25a einer durch einen Kontakt mit dem Körperteil 10a ausgelösten Verkippung zumindest eines Teils des Rasenmähers 12a relativ zu einem Untergrund 18a sensiert. Im vorliegenden Fall ist die Verkippung eine Verkippung eines Teils des Rasenmähers 12a um die Rollachse 22a des Rasenmähers 12a. Denkbar ist auch eine Sensierung einer Verkippung um die Gierachse 56a und/oder die Nickachse 54a des Rasenmähers 12a.

Alternativ, insbesondere in einem verschiedenen Verfahrensschritt, ist es auch denkbar, dass ein Körperteilkennwert sensiert wird. Ein Körperteilkennwert kann eine beliebige Kenngröße eines Körperteils 10a sein, beispielsweise Maße des Körperteils, welche beispielsweise mittels einer Kamera erfasst werden.

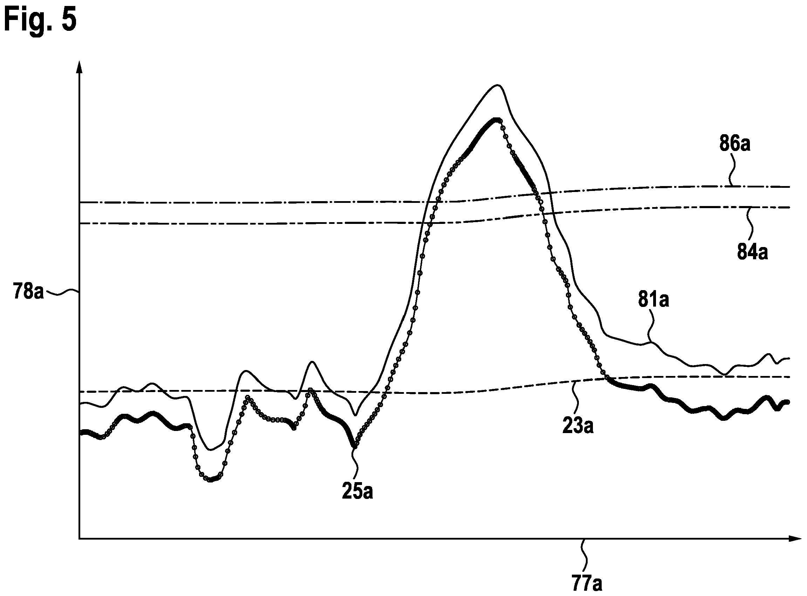

In Fig. 5 ist eine beispielhafte Erkennung des Körperteils mittels des Verkippungskennwerts 25a dargestellt. Auf einer Abszissenachse 77a der Fig. 5 ist eine Position des Rasenmähers 12a anhand einer von ihm zurückgelegten Strecke dargestellt. Die Ordinatenachse 78a ist eine Größenachse. In dem Verfahrensschritt 73a werden die Verkippungskennwerte 25a geglättet. Im vorliegenden Fall werden die Verkippungskennwerte 25a exponentiell geglättet. Die Verkippungskennwerte 25a werden mit dem Arbeitsbereichsdatensatz einer virtuellen Karte eines Arbeitsbereichs 24a verglichen. Im vorliegenden Fall definiert der Arbeitsbereichsdatensatz zumindest eine Steigung 23a des Untergrunds 18a einer aktuellen Arbeitsposition des Rasenmähers 12a. Der Arbeitsbereichsdatensatz umfasst die Steigung 23a der aktuellen Position des Rasenmähers 12a. In Figur 5 ist die Steigung 23a der aktuellen Position des Rasenmähers 12a dargestellt. Die Verkippungskennwerte 25a werden mit der Steigung 23a des Untergrunds 18a der aktuellen Position des Rasenmähers 12a korrigiert. Korrigierte und geglättete Verkippungskennwerte 80a sind in Fig. 5 dargestellt.

Das Verfahren umfasst zumindest einen weiteren Verfahrensschritt 80a (vgl. Fig. 4). In dem weiteren Verfahrensschritt 80a berücksichtigt die Schutzeinheit 14a zur Körperteilerkennung zumindest eine Änderung des Verkippungskennwerts 25a. Im vorliegenden Fall werden die korrigierten und geglätteten Verkippungskennwerte 81a mit einem charakteristischen Grenzkennwert 84a verglichen. Der charakteristische Grenzwert 84a kann insbesondere mit der Steigung 23a des Untergrunds 18a korrigiert sein. Überschreiten die korrigierten Verkippungskennwerte 81a den charakteristischen Grenzkennwert 84a, wird eine Körperteilerkennung aktiviert. Überschreiten die korrigierten und geglätteten Verkippungskennwerte 81a einen weiteren charakteristischen Grenzkennwert 86a, wird ein Körperteil 10a erkannt. Der weitere charakteristische Grenzwert 86a kann insbesondere mit der Steigung 23a des Untergrunds 18a korrigiert sein.

Das Verfahren umfasst zumindest einen weiteren Verfahrensschritt 88a. In dem weiteren Verfahrensschritt 88a führt die Schutzeinheit 14a bei Erkennung eines Körperteils 10a zumindest die Schutzroutine 26a aus. Die Schutzroutine 26a umfasst zumindest einen der folgenden Schutzschritte: Anhalten zumindest eines Teils des Rasenmähers 12a, Ausgabe eines Warn- und/oder Fehlersignals und/oder Richtungsänderung des Rasenmähers 12a. Die Schutzeinheit 14a variiert abhängig von einer Position des Rasenmähers 12a relativ zu einem Arbeitsbereich 24a zumindest einen der Schutzschritte der Schutzroutine 26a.

Für den Fall, dass der Rasenmäher 12a sich ausgehend von der Versorgungs- und/oder Parkstation 30a in einer Rückwärtsfahrt befindet und eine Bearbeitung des Untergrunds 18a in einem Innenbereich des Arbeitsbereichs 24a durchführen soll, umfasst die Schutzroutine 26a die Schutzschritte: Anhalten und Ausgabe eines Warn- und/oder Fehlersignals.

Für den Fall, dass der Rasenmäher 12a sich ausgehend von der Versorgungs- und/oder Parkstation 30a in einer Rückwärtsfahrt befindet und eine Bearbeitung des Untergrunds 18a in einem Nahbereich des Begrenzungselements 40a des Arbeitsbereichs 24a durchführen soll, umfasst die Schutzroutine 26a die Schutzschritte: Anhalten und Ausgabe eines Warn- und/oder Fehlersignals.

Für den Fall, dass der Rasenmäher 12a sich ausgehend von einer Hinderniserkennung in einer Rückwärtsfahrt befindet und eine Bearbeitung des Untergrunds 18a in einem Innenbereich des Arbeitsbereichs 24a durchführen soll, umfasst die Schutzroutine 26a die Schutzschritte: Anhalten, Richtungsänderung, insbesondere von dem erkannten Körperteil 10a weg, und eine Bearbeitung Fortsetzen.

Für den Fall, dass der Rasenmäher 12a sich ausgehend von einem Begrenzungselement 40a in einer Rückwärtsfahrt befindet, umfasst die Schutzroutine 26a die Schutzschritte: Anhalten, Richtungsänderung, insbesondere von dem erkannten Körperteil 10a weg, und eine Bearbeitung Fortsetzen.

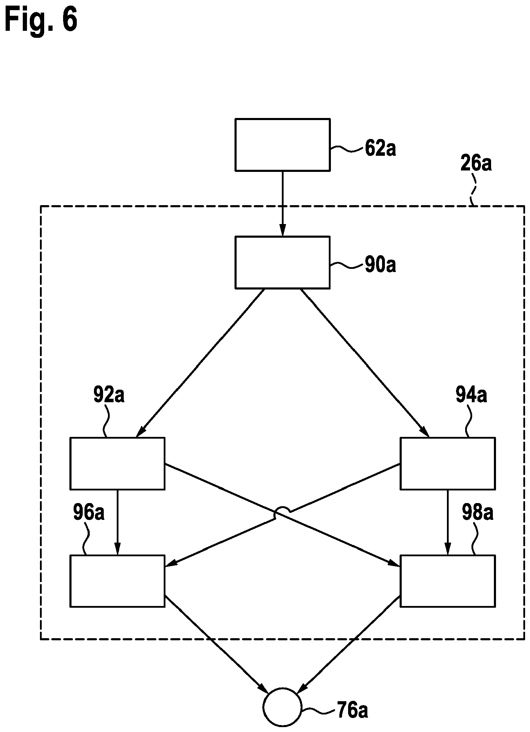

In Fig. 6 ist ein schematischer Ablaufplan eines beispielhaften Steuerungsverfahrens der Schutzroutine 26a dargestellt.

Das Steuerungsverfahren umfasst zumindest einen Steuerverfahrensschritt 90a. In dem Steuerverfahrensschritt 90a wird bei einer Rückwärtsfahrt der Rasenmäher 12a aufgrund einer Erkennung eines Körperteils 10a angehalten. Ferner wird anhand des Verkippungskennwerts 25a und/oder des Körperteilkennwerts das dem Körperteil 10a nächstgelegene Rad 32a des Rasenmähers 12a bestimmt. Ferner wird das dem Körperteil 10a abgewandte Rad 34a bestimmt. Abhängig von einer Orientierung des Rasenmähers 12a werden/wird das dem Körperteil 10a nächstgelegene Rad 32a und/oder das dem Körperteil 10a abgewandte Rad 34a gesteuert.

Das Steuerverfahren umfasst einen weiteren Steuerverfahrensschritt 92a. In dem weiteren Steuerverfahrensschritt 92a wird der Rasenmäher 12a um das dem Körperteil 10a nächstgelegene Rad 32a gedreht. Das dem erfassten Körperteil 10a nächstgelegene Rad 32a wird blockiert. Das dem Körperteil 10a abgewandte Rad 34a wird entgegen der Richtung des Körperteils 10a angetrieben, sodass der Rasenmäher 12a um das nächstgelegene Rad 32a gedreht wird.

Das Steuerverfahren umfasst einen weiteren Steuerverfahrensschritt 94a. In dem weiteren Steuerverfahrensschritt 94a wird der Rasenmäher 12a um das dem Körperteil 10a abgewandte Rad 34a gedreht. Das dem erfassten Körperteil 10a abgewandte Rad 34a wird blockiert. Das dem Körperteil 10a nächstgelegene Rad 32a wird entgegen der Richtung des Körperteils 10a angetrieben, so dass der Rasenmäher 12a um das dem Körperteil 10a abgewandte Rad 34a gedreht wird.

Das Steuerverfahren umfasst einen weiteren Steuerverfahrensschritt 96a. In dem weiteren Steuerverfahrensschritt 96a wird der Rasenmäher 12a für den Fall, dass dieser gedreht wurde und sich innerhalb des Arbeitsbereichs 24a befindet, in eine Vorwärtsfahrt gemäß dem Betriebsverfahrensschritt 68a versetzt.

Das Steuerverfahren umfasst einen weiteren Steuerverfahrensschritt 98a. In dem weiteren Steuerverfahrensschritt 98a wird der Rasenmäher 12a gedreht, bis er sich innerhalb des Arbeitsbereichs 24a befindet.

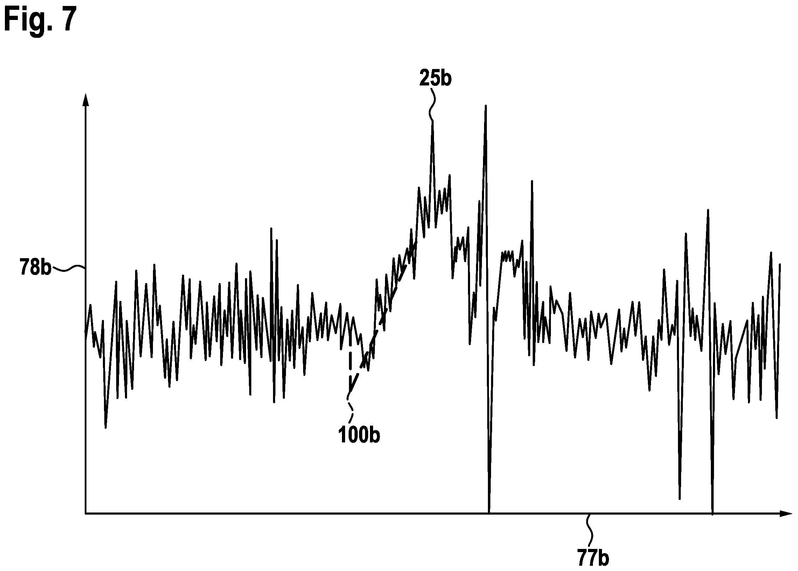

In der Figur 7 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels der Figuren 1 bis 6 verwiesen werden kann. Zur Unterscheidung der Ausführungsbeispiele ist der Buchstabe a den Bezugszeichen des Ausführungsbeispiels in den Figuren 1 bis 6 nachgestellt. In dem Ausführungsbeispiel der Figur 7 ist der Buchstabe a durch den Buchstaben b ersetzt.

In Fig. 7 ist eine alternative beispielhafte Erkennung des Körperteils 10b mittels Verkippungskennwerten 25b dargestellt. Auf einer Abszissenachse 77b der Fig. 7 ist eine Position des Rasenmähers anhand seiner zurückgelegten Strecke dargestellt. Ferner ist eine Ordinatenachse 78b dargestellt, welche eine Größenachse ist.

Das Verfahren zum Schutz eines Körperteils umfasst zumindest einen weiteren Verfahrensschritt. In dem weiteren Verfahrensschritt berücksichtigt eine Schutzeinheit zur Körperteilerkennung zumindest eine Änderung der Verkippungskennwerte 25b. Die Verkippungskennwerte 25b werden mit einer charakteristischen Verkippungskennlinie 100b verglichen. Die charakteristische Verkippungskennlinie 100b ist eine Verkippungs-Strecken-Kennlinie. Die charakteristische Verkippungskennlinie 100b entspricht dem durch einen Körperteil ausgelösten statistischen Verkippungsverhalten eines Rasenmähers. Die Änderung der Verkippungskennwerte 25b entspricht dabei der mathematischen Steigung der charakteristischen Verkippungskennlinie 100b. Es wird der Körperteil erkannt und insbesondere eine Körperteilerkennung ausgelöst, wenn eine Korrelation der Verkippungskennwerte 25b mit der charakteristischen Verkippungskennlinie 100b einen Korrelationskoeffizienten von zumindest 0,7 überschreitet.

## Patentansprüche

1. Verfahren zum Schutz zumindest eines Körperteils (10a) vor einer Verletzung durch einen Rasenmäher (12a), insbesondere einen autonomen Rasenmäher (12a), welcher zumindest eine Schutzeinheit (14a) aufweist, die zumindest eine Sensoreinheit (16a) umfasst, wobei in zumindest einem Verfahrensschritt zumindest von der Sensoreinheit (16a) zur Erkennung des Körperteils (10a) zumindest ein Körperteilkennwert sensiert wird, **dadurch gekennzeichnet, dass** in zumindest einem Verfahrensschritt zumindest von der Sensoreinheit (16a) zur Erkennung des Körperteils (10a) zumindest ein Verkippungskennwert (25a; 25b) einer durch einen Kontakt mit dem Körperteil (10a) ausgelösten Verkippung zumindest eines Teils des Rasenmähers (12a) relativ zu einem Untergrund (18a) sensiert wird.

2. Verfahren nach Anspruch 1, **dadurch gekennzeichnet, dass** in zumindest einem Verfahrensschritt durch zumindest einen als Beschleunigungssensor ausgebildeten Sensor (20a) der Sensoreinheit (16a) der Verkippungskennwert (25a; 25b) sensiert wird.

3. Verfahren nach Anspruch 1 oder 2, **dadurch gekennzeichnet, dass** in zumindest einem Verfahrensschritt bei einer zumindest teilweisen Verkippung des Rasenmähers (12a) um eine Rollachse (22a) des Rasenmähers (12a) der Verkippungskennwert (25a; 25b) sensiert wird.

4. Verfahren nach einem der vorhergehenden Ansprüche, **dadurch gekennzeichnet, dass** in zumindest einem Verfahrensschritt die Schutzeinheit (14a) den Verkippungskennwert (25a; 25b) und/oder den Körperteilkennwert mit zumindest einem Arbeitsbereichsdatensatz, insbesondere einer virtuellen Karte, eines Arbeitsbereichs (24a) vergleicht.

5. Verfahren nach Anspruch 4, **dadurch gekennzeichnet, dass** der Arbeitsbereichsdatensatz zumindest eine Steigung des Untergrunds (18a) einer aktuellen Arbeitsposition des Rasenmähers (12a) definiert.

6. Verfahren nach einem der vorhergehenden Ansprüche, **dadurch gekennzeichnet, dass** in zumindest einem Verfahrensschritt die Schutzeinheit (14a) zur Körperteilerkennung zumindest eine Änderung des Verkippungskennwerts (25a; 25b) berücksichtigt.

7. Verfahren nach einem der vorhergehenden Ansprüche, **dadurch gekennzeichnet, dass** in zumindest einem Verfahrensschritt die Schutzeinheit (14a) bei Erkennung eines Körperteils (10a) zumindest eine Schutzroutine (26a) ausführt, welche zumindest einen der folgenden Schutzschritte umfasst: Anhalten zumindest eines Teils des Rasenmähers (12a), Ausgabe eines Warn- und/oder Fehlersignals und/oder Richtungsänderung des Rasenmähers (12a).

8. Verfahren nach Anspruch 7, **dadurch gekennzeichnet, dass** in zumindest einem Verfahrensschritt die Schutzeinheit (14a) abhängig von einer Position des Rasenmähers (12a) relativ zu einem Arbeitsbereich (24a) zumindest einen Schutzschritt der Schutzroutine (26a) variiert.

9. Verfahren nach Anspruch 7 oder 8, **dadurch gekennzeichnet, dass** in zumindest einem Verfahrensschritt bei einer Körperteilerkennung in einem Nahbereich (28a) zumindest einer Versorgungs- und/oder Parkstation (30a) für den Rasenmäher (12a) die Schutzeinheit (14a) den Rasenmäher (12a) zumindest teilweise anhält und ein Fehler- und/oder Warnsignal ausgibt,

10. Verfahren nach einem der vorhergehenden Ansprüche, **dadurch gekennzeichnet, dass** in zumindest einem Verfahrensschritt die Schutzeinheit (14a) anhand des Verkippungskennwerts (25a; 25b) und/oder des Körperteilkennwerts ein dem Körperteil (10a) nächstgelegenes Rad (32a) des Rasenmähers (12a) bestimmt.

11. Verfahren nach Anspruch 10, **dadurch gekennzeichnet; dass** in zumindest einem Verfahrensschritt das dem erfassten Körperteil (10a) nächstgelegene Rad (32a) blockiert wird und der Rasenmäher (12a) entgegen einer Richtung des Körperteils (10a) um das nächstgelegene Rad (32a) gedreht wird.

12. Verfahren nach Anspruch 10 oder 11, **dadurch gekennzeichnet, dass** in zumindest einem Verfahrensschritt das dem erfassten Körperteil (10a) abgewandte Rad (34a) blockiert wird und der Rasenmäher (12a) entgegen einer Richtung des Körperteils (10a) um das abgewandte Rad (34a) gedreht wird.

13. Rasenmäher (12a), insbesondere autonomer Rasenmäher (12a), mit zumindest einer Schutzeinheit (14a) zu einer Durchführung eines Verfahrens nach einem der vorhergehenden Ansprüche.

## Claims

1. Method for protecting at least one body part (10a) against injury by a lawnmower (12a), in particular an autonomous lawnmower (12a) which has at least one protection unit (14a) which comprises at least one sensor unit (16a), wherein in at least one method step at least one body part characteristic value is sensed at least by the sensor unit (16a) for detecting the body part (10a),
**characterized in that** in at least one method step at least one tilting characteristic value (25a; 25b) of tilting, triggered by contact with the body part (10a), of at least part of the lawnmower (12a) relative to an underlying surface (18a) is sensed at least by the sensor unit (16a) for detecting the body part (10a).

2. Method according to Claim 1, **characterized in that** in at least one method step the tilting characteristic value (25a; 25b) is sensed by at least one sensor (20a), embodied as an accelerator sensor, of the sensor unit (16a).

3. Method according to Claim 1 or 2, **characterized in that** in at least one method step the tilting characteristic value (25a; 25b) is sensed when there is at least partial tilting of the lawnmower (12a) about a rolling axis (22a) of the lawnmower (12a).

4. Method according to one of the preceding claims, **characterized in that** in at least one method step the protection unit (14a) compares the tilting characteristic value (25a; 25b) and/or the body part characteristic value with at least one working area data set, in particular of a virtual map, of a working area (24a).

5. Method according to Claim 4, **characterized in that** the working area data set defines at least one gradient of the underlying surface (18a) of a current working position of the lawnmower (12a).

6. Method according to one of the preceding claims, **characterized in that** in at least one method step the protection unit (14a) for body part recognition takes into account at least one change in the tilting characteristic value (25a; 25b).

7. Method according to one of the preceding claims, **characterized in that** in at least one method step the protection unit (14a) executes at least one protection routine (26a) when a body part (10a) is detected, which protection routine (26a) comprises at least one of the following protection steps:
stopping at least part of the lawnmower (12a), outputting a warning signal and/or fault signal and/or change in direction of the lawnmower (12a).

8. Method according to Claim 7, **characterized in that** in at least one method step the protection unit (14a) varies at least a protection step of the protection routine (26a) according to a position of the lawnmower (12a) relative to a working area (24a).

9. Method according to Claim 7 or 8, **characterized in that** in at least one method step the protection unit (14a) at least partially stops the lawnmower (12a) and outputs a fault signal and/or warning signal when a body part is detected in the vicinity (28a) of at least one supply and/or parking station (30a) for the lawnmower (12a).

10. Method according to one of the preceding claims, **characterized in that** in at least one method step the protection unit (14a) determines a wheel (32a), which is closest to the body part (10a), of the lawnmower (12a) on the basis of the tilting characteristic value (25a; 25b) and/or of the body part characteristic value.

11. Method according to Claim 10, **characterized in that** in at least one method step the wheel (32a) which is closest to the sensed body part (10a) is blocked and the lawnmower (12a) is rotated about the closest wheel (32a) counter to a direction of the body part (10a).

12. Method according to Claim 10 or 11, **characterized in that** in at least one method step the wheel (34a) which faces away from the sensed body part (10a) is blocked and the lawnmower (12a) is rotated about the wheel (34a) which is facing away, counter to a direction of the body part (10a).

13. Lawnmower (12a), in particular autonomous lawnmower (12a), having at least one protection unit (14a) for carrying out a method according to one of the preceding claims.

## Revendications

1. Procédé de protection d'au moins une partie corporelle (10a) contre une blessure provoquée par une tondeuse à gazon (12a), en particulier une tondeuse à gazon autonome (12a), qui comporte au moins une unité de protection (14a) comprenant au moins une unité de détection (16a), dans lequel, lors d'au moins une étape du procédé, au moins une valeur caractéristique d'une partie corporelle est détectée au moins par l'unité de détection (16a) pour reconnaître la partie corporelle (10a),
**caractérisé en ce que**, lors d'au moins une étape du procédé, au moins une valeur caractéristique d'inclinaison (25a ; 25b) d'une inclinaison d'au moins une partie de la tondeuse à gazon (12a) par rapport à un terrain (18a), provoquée par un contact avec la partie corporelle (10a), est détectée au moins par l'unité de détection (16a) pour reconnaître la partie corporelle (10a).

2. Procédé selon la revendication 1, **caractérisé en ce que**, lors d'au moins une étape du procédé, la valeur caractéristique d'inclinaison (25a ; 25b) est détectée par au moins un capteur (20a), réalisé sous la forme d'un capteur d'accélération, de l'unité de détection (16a).

3. Procédé selon la revendication 1 ou 2, **caractérisé en ce que**, lors d'au moins une étape du procédé, la valeur caractéristique d'inclinaison (25a ; 25b) est détectée dans le cas d'une inclinaison au moins partielle de la tondeuse à gazon (12a) autour d'un axe de roulement (22a) de la tondeuse à gazon (12a).

4. Procédé selon l'une des revendications précédentes, **caractérisé en ce que**, lors d'au moins une étape du procédé, l'unité de protection (14a) compare la valeur caractéristique d'inclinaison (25a ; 25b) et/ou la valeur caractéristique de la partie corporelle avec au moins un jeu de données de zone de travail, en particulier une carte virtuelle, d'une zone de travail (24a).

5. Procédé selon la revendication 4, **caractérisé en ce que** le jeu de données de zone de travail définit au moins une pente du terrain (18a) à une position de travail actuelle de la tondeuse à gazon (12a).

6. Procédé selon l'une des revendications précédentes, **caractérisé en ce que**, lors d'au moins une étape du procédé, l'unité de protection (14a) prend en compte au moins une modification de la valeur caractéristique d'inclinaison (25a ; 25b) pour la reconnaissance de la partie corporelle.

7. Procédé selon l'une des revendications précédentes, **caractérisé en ce que**, lors d'au moins une étape du procédé, l'unité de protection (14a) exécute au moins une routine de protection (26a) lorsqu'une partie corporelle (10a) est reconnue, laquelle routine de protection comprend au moins l'une des étapes de protection suivantes :
l'arrêt d'au moins une partie de la tondeuse à gazon (12a), l'émission d'un signal d'avertissement et/ou d'erreur et/ou le changement de direction de la tondeuse à gazon (12a).

8. Procédé selon la revendication 7, **caractérisé en ce que**, lors d'au moins une étape du procédé, l'unité de protection (14a) fait varier au moins une étape de protection de la routine de protection (26a) en fonction d'une position de la tondeuse à gazon (12a) par rapport à une zone de travail (24a).

9. Procédé selon la revendication 7 ou 8, **caractérisé en ce que**, lors d'au moins une étape du procédé, dans le cas d'une détection d'une partie corporelle dans une zone proche (28a) d'au moins un poste d'alimentation et/ou de stationnement (30a) de la tondeuse à gazon (12a), l'unité de protection (14a) arrête au moins partiellement la tondeuse à gazon (12a) et émet un signal d'erreur et/ou d'avertissement.

10. Procédé selon l'une des revendications précédentes, **caractérisé en ce que**, lors d'au moins une étape du procédé, l'unité de protection (14a) détermine, sur la base de la valeur caractéristique d'inclinaison (25a ; 25b) et/ou de la valeur caractéristique de la partie corporelle, une roue (32a) de la tondeuse à gazon (12a) qui est la plus proche de la partie corporelle (10a).

11. Procédé selon la revendication 10, **caractérisé en ce que**, lors d'au moins une étape du procédé, la roue (32a) la plus proche de la partie corporelle (10a) détectée est bloquée et la tondeuse à gazon (12a) est amenée à tourner autour de la roue (32a) la plus proche dans une direction opposée à celle de la partie corporelle (10a).

12. Procédé selon la revendication 10 ou 11, **caractérisé en ce que**, lors d'au moins une étape du procédé, la roue (34a) éloignée de la partie corporelle (10a) détectée est bloquée et la tondeuse à gazon (12a) est amenée à tourner autour de la roue éloignée (34a) dans une direction opposée à celle de la partie corporelle (10a).

13. Tondeuse à gazon (12a), en particulier tondeuse à gazon autonome (12a), comprenant au moins une unité de protection (14a) destinée à mettre en œuvre un procédé selon l'une des revendications précédentes.
